(19) Europäisches Patentamt / European Patent Office / Office européen des brevets

(11) EP 2 608 545 A1

(12) **EUROPEAN PATENT APPLICATION**
published in accordance with Art. 153(4) EPC

(43) Date of publication:
**26.06.2013 Bulletin 2013/26**

(21) Application number: **11818014.0**

(22) Date of filing: **14.07.2011**

(51) Int Cl.:
***H04N 9/64*** *(2006.01)* ***G06T 1/00*** *(2006.01)*
***G06T 7/00*** *(2006.01)* ***H04N 9/04*** *(2006.01)*
***H04N 1/40*** *(2006.01)*

(86) International application number:
**PCT/JP2011/066124**

(87) International publication number:
**WO 2012/023370 (23.02.2012 Gazette 2012/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.08.2010 JP 2010184185**

(71) Applicant: **Aisin Seiki Kabushiki Kaisha**
**Aichi 448-8650 (JP)**

(72) Inventors:
- **DONISHI, Yukiko**
  **Kariya-shi**
  **Aichi 448-8650 (JP)**
- **ASANO, Tadashi**
  **Kariya-shi**
  **Aichi 448-8650 (JP)**
- **NAITO, Takeshi**
  **Kariya-shi**
  **Aichi 448-8650 (JP)**

(74) Representative: **TBK**
**Bavariaring 4-6**
**80336 München (DE)**

(54) **TARGET LOCATION DETERMINATION DEVICE**

(57) Provided is a target location determination device that is able to accurately recognize a color pattern as well as reducing the calculation load, even when using a color camera and a color target. The target location determination device is provided with a grayscaling profile storage portion that stores a grayscaling profile according to which the luminance difference between a first monochrome color converted from a first color and a second monochrome color converted from a second color of a target is greater than the luminance difference between the first color and the second color, and a grayscaling portion that converts color image data into grayscale image data using the grayscaling profile.

*Fig. 1*

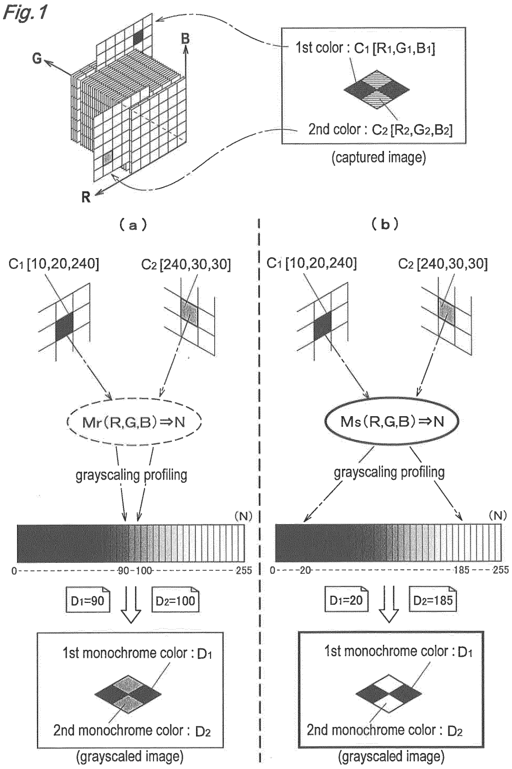


EP 2 608 545 A1

## Description

[Technical Field]

The present invention relates to a target location determination device that, by image processing a captured image of a color target consisting of a combination of different colors, determines a location of the color target in the captured image.

[Background Art]

In recent years, an increasing number of vehicles are coming equipped with a camera so as to enables the driver of the vehicle to visually check the sides and behind the vehicle and the like via a monitor in the vehicle. Furthermore, a device that performs image processing and the like utilizing images captured by this camera and assists with parking and the like has also been developed. Particularly with regard to cameras that import captured images that serve as a basis for creating information that is utilized for positioning a vehicle or the like, calibration such as optical axis alignment and the like with high accuracy is demanded. The above target location specification device is used for calibration processing of such in-vehicle cameras. For example, technology that involves using an in-vehicle camera to capture an image of a marker (target) having a black and white checkered pattern that is disposed in two places within the field of view of the camera, detecting a center point (calibration point) of the marker through image processing, and calibrating the in-vehicle camera is known (e.g., see Patent Document 1). In the case of using a target having a black and white pattern, a black and white camera adjusted so that the luminance difference of the black and white pattern is clear needs to be utilized in order to appropriately bring out the luminance difference of this black and white pattern. However, color cameras that generate a color image are now often employed from the point of view of visibility and the like, as the camera used in order to provide a view down the sides and behind the vehicle and the like on a monitor in a vehicle. In the case where a color image signal output from a color camera is used for luminance difference evaluation of a black and white pattern, the possibility arises of the luminance difference of the black and white pattern not being sufficiently obtained.

A target location specification device using a color camera and a color target is also known (e.g., see Patent Document 2). This target location specification device is provided with a color difference conversion portion that processes pixel values of a captured image obtained by capturing an image of a target consisting of a combination of a first color and a second color, and generates a first color component value, a second color component value and a luminance value, a color region determination portion that determines the regions of the first color and the second color based on the first color component value and the second color component value using a determination condition that is based on the luminance value, a boundary detection portion that detects a boundary between the first color and the second color based on the determination result, and a target location computation portion that computes a location of the target based on the boundary detection result. Because color image signals are constituted by three color component signals (e.g., RGB signals), the calculation load of the image processing calculations is greater than with a black and white image (grayscale image), and the cost burden also increases.

[Citation List]

[Patent Literature]

[Patent Document 1]: JP 2008-131250A (para. 0023-0040, Fig. 1)
[Patent Document 2]: WO 2010/016379 (para. 0006-0013, Fig. 3)

[Summary of Invention]

[Technical Problem]

In view of the above situation, an object of the present invention is to provide a target location determination device that is able to accuracy recognize a color pattern as well as reducing the calculation load, even when using a color camera and a color target.

[Solution to Problem]

A characteristic of the present invention in a target location determination device for determining a location of a color target in a captured image based on color image data obtained by capturing an image of the color target, which consists of a combination of a first target region that is a first color and a second target region that is a second color having a different color component from the first color, is the provision of a grayscaling profile storage portion that stores a grayscaling profile for respectively converting the first color and the second color into a first monochrome color and a second monochrome color so that a luminance difference between the first monochrome color converted from the first color and the second monochrome color converted from the second color is greater than a luminance difference between the first color and the second color, a grayscaling portion that converts the color image data into grayscale image data using the grayscaling profile, and a target location determination module that determines a target location in the captured image by recognizing a boundary between the first target region and the second target region of the color target in the grayscale image data.

This configuration enables the boundary between the region that is the first monochrome color and the region that is the second monochrome color to be accuracy detected, because a grayscaling profile that increases the luminance difference between the first monochrome color into which the first color is converted and the second monochrome color into which the second color is converted is used, when converting from color image data into grayscale image data. Moreover, the calculation load is reduced compared with color processing because this boundary detection is performed based on a grayscale image, or in other words, based only on luminance values. Because the color balance (gray balance to be precise) of a captured image that has been grayscaled in this way is greatly out of adjustment, it is better to use the color image data before grayscaling in monitor display for the driver to check the area around the vehicle.

As for a specific creation of the abovementioned grayscaling profile, preferably the grayscaling profile is created so as to approach white as the color component of the first color increases, and to approach black as the color component of the second color increases. For example, the first color is red and the second color is blue, so as be easily discernible even with the naked eye. In the case where the RGB values, which are pixel values, contain a high proportion of R component value compared with the other two color component values, a first relationship in which the profile will be white is produced. Similarly, in the case where the RGB values contain a high proportion of B component value compared with the other two color component values, a second relationship in which the profile will be black is produced. A grayscaling profile that is able to represent a relationship in which the profile becomes whiter as the red component increases and becomes blacker as the blue component increases is created by merging the first and second relationships. Although distinguishing by luminance difference is difficult with typical grayscaling, a color target whose first color is red and whose second color is blue is a favorable application example of the present invention, considering that red and blue targets are used comparatively often since distinguishability with human vision is good.

It is also conceivable for the target colors of the color target to differ depending on intended use and other factors. So as to be able to respond to such cases, in one favorable embodiment of the present invention, a grayscaling profile for every different color combination of the first color and the second color utilized in the color target is stored in the grayscaling profile storage portion. This configuration enables various color patterns to be accurately recognized by creating and storing grayscaling profiles compatible with the combinations of target colors of the color target that could possibly be used beforehand.

Depending on type of illumination light source that illuminates the color target, the problem of the original first color and second color shifting significantly within color image data acquired by a color camera may arise. In order to reduce such a problem, the colors after the original first color and second color have shifted due to specific type of illumination light source may be derived beforehand, and a grayscaling profile that uses those colors as the first color and the second color can be created for that type of illumination light source. For this purpose, in one favorable embodiment of the present invention, a grayscaling profile is created for every type of illumination light source that illuminates the color target, and stored in the grayscaling profile storage portion.

[Brief Description of Drawings]

[Fig. 1] Fig. 1 is a schematic diagram illustrating the principles of a grayscaling process employed by a target location determination device according to the present invention.
[Fig. 2] Fig. 2 is an illustrative diagram showing an example of a disposition relationship of a target and a vehicle used for camera calibration.
[Fig. 3] Fig. 3 is an illustrative diagram showing an example of a color target.
[Fig. 4] Fig. 4 is a functional block diagram showing an image processing function in the target location determination device.

[Fig. 5] Fig. 5 is a flowchart showing the flow of a color target location determining process in the target location determination device.

[Fig. 6] Fig. 6 is a functional block diagram showing an image processing function in another embodiment.

[Description of Embodiments]

Hereafter, embodiments of the present invention will be described based on the drawings. The principles of a grayscaling process employed by the target location determination device according to the present invention are schematically shown in Fig. 1. Here, a color target 2 is constituted by a combination (pattern) of two different colors. One of the two colors is called a first color (here, blue colors) and is represented by C1 (R1, G1, B1) (RGB color system). The other of the two colors is called a second color (here, red colors) and is represented by C2 (R2, G2, B2). In other words, the characteristic colors characterizing this color target 2 are the first color and the second color, and precise location detection is performed through detection of the boundary line between a first target region colored the first color and a second target region colored the second color.

Color image data is generated as a result of an image of this color target 2 being captured with a color camera, and, here, the pixel value of the first color and the pixel value of the second color in the color image data are also respectively represented by C1 (R1, G1, B1) and C2 (R2, G2, B2). The conversion of this color image data into grayscale image data is the grayscaling process. At this time, the first color: C1 (R1, G1, B1) and the second color: C2 (R2, G2, B2) in the color image data are respectively converted into a first monochrome color: D1 (N1) and a second monochrome color: D2 (N2) in grayscale image data. Note that in the case where the color image data is 32-bit color image data, R1, G1 and B1 and R2, G2 and B2 take values 0-255, and in the case where the grayscale image data is 8-bit grayscale image data, N1 and N2 also take values from 0 to 0-255. C (0, 0, 0) and D (0) are assumed to represent black, and C (255,255,255) and D (255) are assumed to represent white. In this invention, the grayscaling process is intended to make the luminance difference between the first monochrome color that is converted from the first color and the second monochrome color that is converted from the second color greater than the luminance difference between the first color and the second color.

Conversion from one color space to another color space (including a black and white color space) is performed using a color conversion profile called a color conversion matrix, but given that conversion here is to a grayscale space, this profile will be called a grayscaling profile. This grayscaling profile is simply:

$$M[C(R, G, B)] = D(N).$$

Here, R, G and B can be represented as the pixel values of color image data and N can be represented as the pixel value of grayscale image data.

Note that a color conversion profile as referred to here is also used during normal times (during use by a user) for color adjustment of camera images viewed by the user on a display device, and functions as a grayscaling profile during target location determination according to the present invention. Although another color pixel value Cn (Rn, Gn, Bn) is derived from a given color pixel value Cm (Rm, Gm, Bm) when used as a color conversion profile during normal times (during use by a user), one grayscale pixel value D (N) is derived from a given color pixel value Cm (Rm, Gm, Bm) when used as a grayscaling profile.

In Fig. 1, this grayscaling profile is shown with a configuration constituted from a large number of R-B plane tables created for every positional unit of the G axis. In other words, in a prescribed R-B plane table extracted using the value of the G color component, the pixel value: N of grayscale image data is described at a coordinate location determined by the values of the R and B color components. (a) of Fig. 1 shows a conventional grayscaling profile used in typical grayscaling, with a value obtained by dividing the summed value of the respective RGB color component values by 3 being taken as the pixel value: N of the grayscale image data, for example. Accordingly, as shown in (a) of Fig. 1, a first color (almost blue): C1 having R, G and B values (10, 20, 240) is converted to a first monochrome color (middle gray): D2 having an N value (90), and a second color (almost red): C2 having R, G and B values (240, 30, 30) is converted into a second monochrome color (middle gray): D2 having an N value (100). It is clear from this that when such a conventional grayscaling profile is used there is little luminance difference between the first monochrome color (middle gray) and the second monochrome color (middle gray), making it difficult to detect the boundary therebetween.

In order to avoid such a problem, in the present invention, a grayscaling profile according to which the prescribed first color and second color, when grayscaled, are converted into a first monochrome color and a second monochrome color that have a large luminance difference is prepared. For example, as schematically shown in (b) of Fig. 1, a first color (almost blue): C1 having R, G and B values (10, 20, 240) is converted into a first monochrome color (dark gray): D2 having an N value (185), and a second color (almost red): C2 having R, G and B values (240, 30, 30) is converted into a second monochrome color (light gray) D2 having an N value (20). In other words, when represented with an equation this grayscaling profile will be:

$$M(10, 20,240) = 20,$$

and

$$M(240, 30, 30) = 185.$$

This grayscaling profile preferably is created so that the R, G and B values of blue colors are as much as possible continuously converted into regions that will be dark gray, and so that the R, G and B values of red colors are as much as possible continuously converted into regions that will be light gray.

To create a grayscaling profile that supports such continuity, a configuration can be adopted in which the D value is computed using a weight calculation for setting a weight coefficient that depends on the amount of transition, with respect to R, G and B values that transition from pure blue represented by the R, G and B values (0, 0, 255) to approximate blue.

By using a grayscaling profile created in this way, grayscale image data in which a large luminance difference occurs between the first monochrome color and the second monochrome color is output. By using grayscale image data having such a luminance difference, detection of the boundary line between the first target region colored the first color and the second target region colored the second color can be easily and precisely performed.

As shown in Fig. 2, calibration of a color camera (hereinafter, abbreviated to simply "camera") 11 is performed in a state where a vehicle 1 has been stopped at a prescribed location. For example, it is possible to stop the vehicle 1 at a precise location by adopting a configuration in which the vehicle 1 is reversed or moved forward until the wheels are stopped by a tire slot or a tire chock provided at a prescribed location. In the example shown in Fig. 2, two color targets (hereinafter, abbreviated to simply "target") 2 (2a, 2b) are disposed on the floor. As is clear from the diagram, the interval between the two targets 2a and 2b is narrower than the tread width of the vehicle 1, with the targets 2 thus being disposed where they are unlikely to be run over by the wheels of the vehicle 1. In contrast to this disposition, a disposition in which the targets 2 are unlikely to be run over by the wheels of the vehicle 1 may be employed by making the interval between the two targets 2a and 2b wider than the tread width of the vehicle 1.

In Fig. 2, the vehicle 1 has stopped so that the floor at the center of the rear end portion is an origin Ow of a world coordinate system (reference coordinate system, Xw, Yw, Zw). Here, the axes of a camera coordinate system (Xc, Yc, Zc) centered on an optical center Oc of the camera 11 are not parallel with respect the world coordinate system. The world coordinate system and the camera coordinate system are both right-hand coordinate systems, and an Xw axis that is perpendicular to the page and an Xc axis that is substantially perpendicular to the page are not illustrated in the diagram. Coordinate conversion between the world coordinate system and the camera coordinate system can be performed using a well known algorithm.

The target 2 is disposed in at least two places within the range of the field of view of the camera 11. Also, the target 2 is disposed so that the coordinates thereof are known in the world coordinate system. In this example, the target 2, as shown in Fig. 3, has a checkered pattern of blue (first color) and red (second color) as the characteristic colors characterizing this target 2. A point Q in the middle of the pattern is the calibration point, and serves as a reference for calibrating the camera 11. In other words, the target 2 is disposed so that the coordinates of this calibration point Q are known in the world coordinate system. Note that although an example of four rectangles in total consisting of two blue rectangles (first target regions) and two red rectangles (second target regions) is shown here, there may be four or more regions in total, and the number or shape thereof are not limited to that illustrated here.

In the example shown in Fig. 2, the two targets 2 are disposed on the floor symmetrically around the principal axis (Zw axis of the world coordinate system) of the vehicle (D1=D2, W1=W2). The targets do not, however, always need to be symmetrical, and may be disposed in any location within the field of view of the camera 11 whose coordinate values are known. In other words, it is possible to arbitrarily set the disposition of the target 2 depending on factors such as available space in the factory and the relationship with other equipment.

The dimensions of the target 2 are appropriately set so as to be able to accurately detect the calibration point Q, according to the resolution of the camera 11, the performance of the image processing function for processing images captured by the camera 11, the disposition location of the target, and the like. As an example, in the case where D1 and D2 are 1-2 m, and W1 and W2 are around 0.5 m, a target 2 whose black and white regions are each 10-15 cm square and whose entirety is 20-30 cm square is used, as shown in Fig. 3.

In this embodiment, the target location specification device according to the present invention is substantially constituted by an image processing unit whose core member is a computer, and a block diagram schematically showing the image processing function is shown in Fig. 4. As shown in Fig. 4, this image processing unit receives a color image signal (color image data) from an image signal output portion 12 that is incorporated in the camera 11 serving as an image capturing device. A grayscaling module 4, a target location determination module 5, and an attachment accuracy determination module 6 are included in the image processing unit. The grayscaling module 4 inputs color image data which is the color captured image sent from the image signal output portion 12, and expands the color image data in a working memory which is not illustrated. Furthermore, this color image data is converted into grayscale image data which is a black and white captured image. The target location determination module 5 derives the location of the target 2, in particular the location of the calibration point Q of the target 2, from grayscale image data which is the black and white captured image expanded in the working memory. The attachment accuracy determination module 6 determines the attachment accuracy of the camera 11 from the difference between the location of the calibration point Q of the target 2 specified by the target location determination module 5 and the location of the calibration point that is targeted.

The grayscaling module 4 includes a target color setting portion 41, a grayscaling profile storage portion 42, a grayscaling profile selection portion 43, and a grayscaling portion 44. The target color setting portion 41 sets the first color and the second color, which are the characteristic colors of the target 2 to be processed, through an input operation from a keyboard 14. A method of estimating and setting the first color and the second color from the input color image data may, of course, be employed.

The grayscaling profile storage portion 42 stores a grayscaling profile (color space conversion matrix) serving as a grayscale conversion table used in the grayscaling process that was described using Fig. 1. In this embodiment, because grayscaling profiles are created for every combination of the specific color configurations of the target 2 (here, blue as the first color and red as the second color), the grayscaling profiles are converted into a database so that they can be searched for and extracted using the color configuration of the target 2 set by the target color setting portion 41 as a search keyword.

The grayscaling profile selection portion 43 selects a conforming grayscaling profile from the color configuration of the target 2 set by the target color setting portion 41, here, the color configuration of a blue and red checkered pattern, and provides the selected grayscaling profile to the grayscaling portion 44. The grayscaling portion 44 generates grayscale image data from the color image data using the grayscaling profile selected by the grayscaling profile selection portion 43.

The target location determination module 5, in this embodiment, includes a preprocessing portion 51, a luminance difference computation portion 52, a threshold setting portion 53, a target region determination portion 54, a boundary detection portion 55, and a target location computation portion 56. The preprocessing portion 51 performs processing such as correction of image distortion caused by the lens characteristic of the camera 11 if needed. The luminance difference computation portion 52 computes the luminance difference between the first monochrome color and the second monochrome color obtained as a result of the first color and the second color being grayscaled using the selected grayscaling profile. The threshold setting portion 53 sets a specific color detection threshold that serves as a determination condition for determining whether a target pixel (target region) is the first monochrome color (first color: blue) or the second monochrome color (second color: red), based on the luminance difference calculation value computed by the luminance difference computation portion 52.

The region determination portion 54 sequentially scans the grayscale image data containing the target 2, using the threshold set by the threshold setting portion 53, and determines the division between the first target region (blue region) and the second target region (red region).

The boundary detection portion 55 detects the boundary between the blue region and red region in the target 2, utilizing the result of determining the first target region (blue region) and the second target region (red region) by the region determination portion 54. Because the boundary detected by the boundary detection portion 55, or in other words, the intersection of the two boundary lines, will be the calibration point Q, the target location computation portion 56 is able to compute the location of the target 2 in the captured image, or in other words, the calibration point Q, based on the result of the boundary detection by the boundary detection portion 55.

Note that the color image signal acquired by the camera 11 and output from the image signal output portion 12 is displayed as a color captured image on a monitor 13 through a video signal generation portion 33.

Next, the flow of control in a color target location determination device provided with the grayscaling module 4 and the target location determination module 5 constituted as mentioned above will be described using Fig. 5.

First, the vehicle 1 is positioned and stopped precisely at a prescribed location of an inspection area (#01). After checking that the vehicle has stopped, the camera 11 is operated and images of the area around the vehicle are captured (#02). The camera is set so that images of the two targets 2 are included in the color images captured by the camera 11 of the vehicle 1 stopped at the prescribed location, even if the attachment accuracy of the camera 11 is a little off. The color image data output through the image signal output portion 12 is subjected to basic image processing such as white balance correction, for example (#03).

Next, the first color and the second color, which are the characteristic colors of the target 2 to be processed that are set in advance in the target color setting portion 41, are read out as the color configuration of the target 2 to be processed (#04). The conforming grayscaling profile is selected, with the color configuration that was read out as a search keyword (#05). The color image data is converted into grayscale image data, using the selected grayscaling profile (#06).

The converted grayscale image data is used in the target location determining process. In the target location determining process, the luminance difference computation portion 52 computes a luminance difference calculation value of the first monochrome color and the second monochrome color (#11). Next, based on the luminance difference calculation value, the threshold setting portion 53 sets a detection threshold for the first target region (blue region) of the target 2 (#12) and a detection threshold for the second target region (red region) of the target 2 (#13). Because it can be inferred that the image was captured in a favorable light environment in the case where the luminance difference (luminance difference calculation value) is large, for example, it is envisioned that the detection thresholds will be rigorously set (difference between the detection threshold for the first target region (blue region) and the detection threshold for the second target region (red region) will be increased) in order to raise the accuracy of automatic detection. In contrast, because it is inferred that the image was captured in an unfavorable light environment (dark environment) in the case where the luminance difference (luminance difference calculation value) is small, it is envisioned that the detection thresholds will be set moderately (difference between the detection threshold for the first target region (blue region) and the detection threshold for the second target region (red region) will be reduced) in order, first of all, to enable automatic detection. A method that allows the detection thresholds to be varied is favorable in the case where fine adjustment is performed manually by an operator after automatic detection. Determination of the first target region (blue region) (#14) and determination of the second target region (red region) (#15) of the target 2 are performed using the thresholds set here. Next, the boundary line between the first target region and the second target region of the target 2 is detected from the result of determining the first target region and the second target region (#16). Of course, it is also possible to implement determination of the first target region and the second target region of the target 2 and detection of the boundary line between the first target region and the second target region at the same time. In any case, because the detected boundary line between the first target region and the second target region will indicate a configuration in which two lines are substantially orthogonal, the calibration point coordinates are computed with the intersection thereof as the calibration point (#17). Note that a configuration may be adopted in which predetermined thresholds are used, rather than performing processing that allows the detection thresholds to be varied such as the abovementioned steps #12 and #13.

The location of the target 2, or in other words, the coordinate location of the calibration point can be derived by the above processing steps. Accordingly, next, the amount of shift between the preset target calibration point and the calibration point computed at step #17 is computed (#18). Based on this computed amount of shift, the attachment accuracy determination module 6 determines the attachment accuracy of the camera 11 (#19).

Other Embodiments

(1) A functional block diagram showing an image processing function of another embodiment is shown in Fig. 6. Differences between the image processing function of this other embodiment and the embodiment shown in Fig. 4 are the addition of a light source estimation portion 45 and the contents of the grayscaling profile. The light source estimation portion 45 performs simulation calculations of weight calculation, rule calculation and the like, using various image feature amounts computed from color image data received from the image signal output portion 12, such as average luminance, histogram characteristics and color component rate, for example, as input parameters, and estimates and outputs the type of light source. Weight calculation as referred to here is a general term for calculations, such as used in a neutral network, for example, that involve using arithmetic equations to minimize error in the output result by assigning a weight coefficient to each input parameter and correcting these weight coefficients through iterative learning. Also, rule calculation is a general term for calculations that involve deriving a result, based on prescribed rules such as if-then sentences. The contents of an actual rule includes, for example, "if the B (blue) color component value is higher than a prescribed value and the R (red) and G (green) component values are lower than a prescribed value, then the possibility of an orange lamp is greater than or equal to a prescribed percentage". Note that the types of light source include a tungsten lamp, a sodium lamp, a fluorescent lamp, an LED lamp and the like, and combinations of these light sources including sunlight may also be applied as the types of light source estimated here. Also, the same types of light source may be sorted according to intensity and magnitude of the color effect of each of these lamps.

The grayscaling profiles stored in the grayscaling profile storage portion 42 may be created not only for every combination of specific color configurations (first color and second color) of the target 2 as mentioned above but also for every type of light source estimated by the light source estimation portion 45. Accordingly, the grayscaling profile selection portion 43 selects a grayscaling profile, using the color configuration of the target 2 set by the target color setting portion 41 and the type of light source estimated by the light source estimation portion 45 as search keywords. This configuration enables target location determination in which adverse influence due to the type of light source when capturing an image of the target is also suppressed.

(2) Each functional portion in the abovementioned grayscaling module 4 and target location determination module 5 indicates a function allocation, and does not necessarily need to be provided independently. It should be obvious that each function may be realized by the collaboration of hardware such as a microcomputer and software such as a program executed on the hardware.

(3) In the abovementioned embodiment, the target 2 to be processed by this color target location determination device is a target 2 for determining the in-vehicle camera attachment location, but may be a target for a stop mark in a parking lot or at a battery charging station. Also, the present invention may be applied, with white lines, yellow lines and the like drawn on the road regarded as targets 2.

(4) In the above embodiment, a blue/red common grayscaling profile that merges a grayscaling profile for reducing the color effect on the first color (blue) and a grayscaling profile for reducing the color effect on the second color (red) is used as a grayscaling profile having the characteristic of reducing the color effect that the target 2 receives due to the light source. Alternatively, a configuration may be adopted in which a blue correction grayscaling profile for reducing the color effect on blue and a red correction grayscaling profile for reducing the color effect on red are prepared, and these grayscaling profiles are used separately.

[Industrial Applicability]

The present invention can be widely utilized in image processing technology for converting a color image of a target characterized by the combination of different colors into a grayscale image, and detecting the boundary between the different colors.

[Reference Signs List]

| | |
|---|---|
| 2 | Color Target |
| 4 | Grayscaling module |
| 41 | Target color setting portion |
| 42 | Grayscaling profile storage portion |
| 43 | Grayscaling profile selection portion |
| 44 | Grayscaling portion |
| 45 | Light source estimation portion |
| 5 | Target location determination module |
| 6 | Attachment accuracy determination module |
| Q | Calibration point (center location of target) |

## Claims

1. A target location determination device for determining a location of a color target in a captured image based on color image data obtained by capturing an image of the color target which consists of a combination of a first target region that is a first color and a second target region that is a second color having a different color component from the first color, comprising:

    a grayscaling profile storage portion that stores a grayscaling profile for respectively converting the first color and the second color into a first monochrome color and a second monochrome color so that a luminance difference between the first monochrome color converted from the first color and the second monochrome color converted from the second color is greater than a luminance difference between the first color and the second color;
a grayscaling portion that converts the color image data into grayscale image data using the grayscaling profile; and
a target location determination module that determines a target location in the captured image by recognizing a boundary between the first target region and the second target region of the color target in the grayscale image data.

**2.** The target location determination device according to claim 1, wherein the grayscaling profile is created so as to approach white as a color component of the first color increases, and to approach black as a color component of the second color increases.

**3.** The target location determination device according to claim 2, wherein the first color is red and the second color is blue.

**4.** The target location determination device according to claim 2, wherein the first color is blue and the second color is red.

**5.** The target location determination device according to any one of claims 1 to 4, wherein the grayscaling profile for every different color combination of the first color and the second color that are utilized in the color target is stored in the grayscaling profile storage portion.

**6.** The target location determination device according to any one of claims 1 to 5, wherein the grayscaling profile is created for every type of illumination light source that illuminates the color target, and stored in the grayscaling profile storage portion.

**7.** The target location determination device according to any one of claims 1 to 6, wherein the first target region and the second target region are disposed adjoining each other.

**8.** The target location determination device according to claim 7, wherein the first target region and the second target region are disposed so that a plurality of linear boundary lines are created, and an intersection of the linear boundary lines is set as a center location of the target.

*Fig. 1*

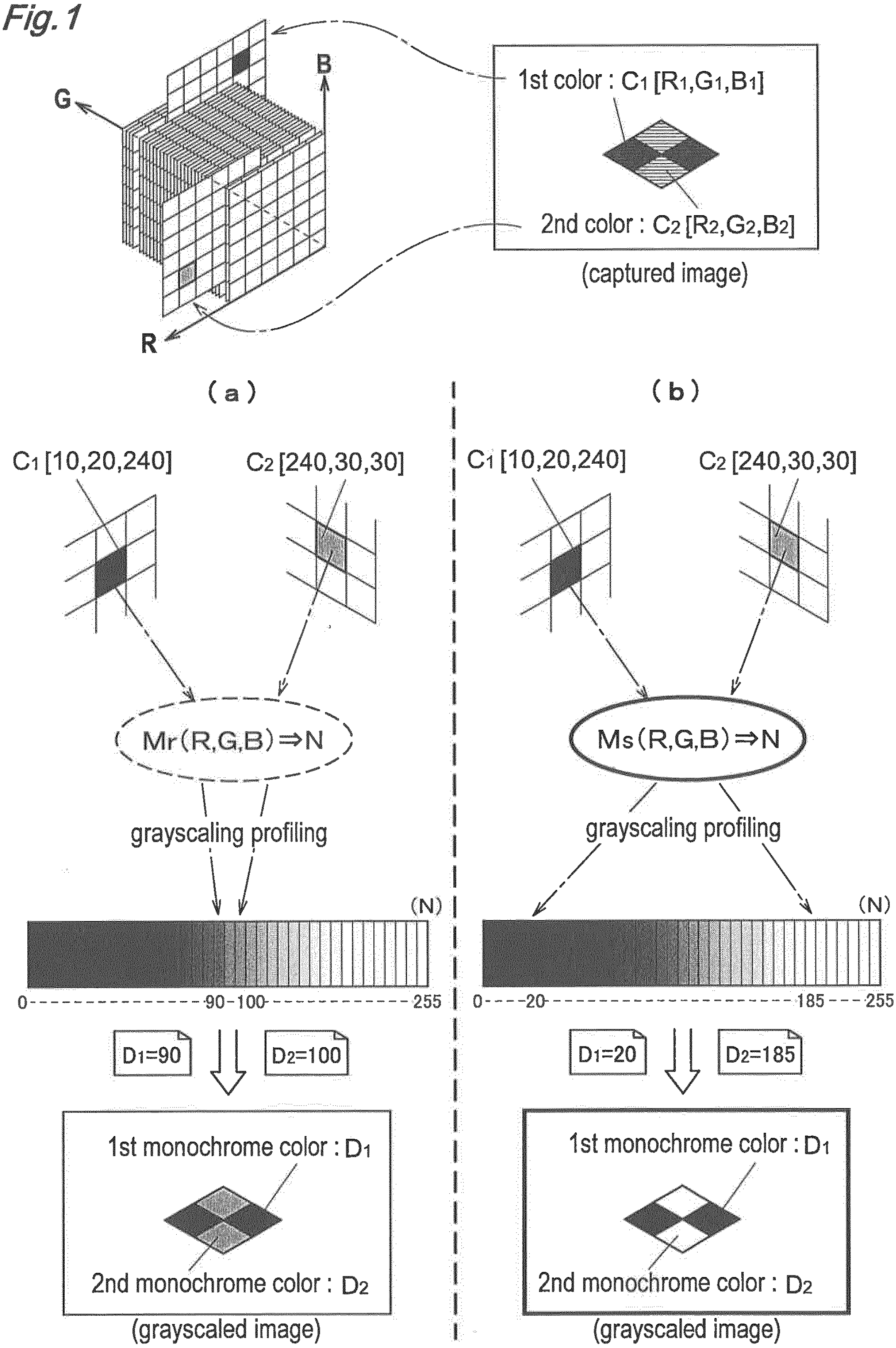
G
B
R
1st color : C1 [R1,G1,B1]
2nd color : C2 [R2,G2,B2]
(captured image)
(a)
(b)
C1 [10,20,240]
C2 [240,30,30]
Mr(R,G,B)⇒N
Ms(R,G,B)⇒N
grayscaling profiling
(N)
0 90 100 255
0 20 185 255
D1=90
D2=100
D1=20
D2=185
1st monochrome color : D1
2nd monochrome color : D2
(grayscaled image)

*Fig.2*

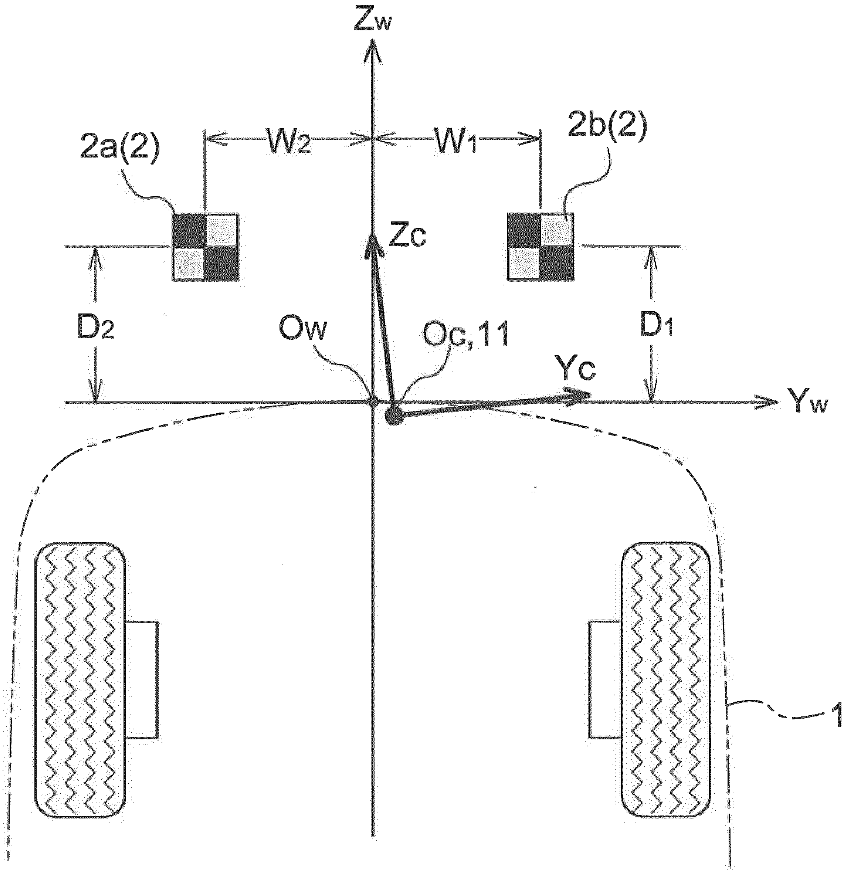
Zw
2a(2)
W2
W1
2b(2)
Zc
D2
Ow
Oc,11
D1
Yc
Yw
1

*Fig.3*

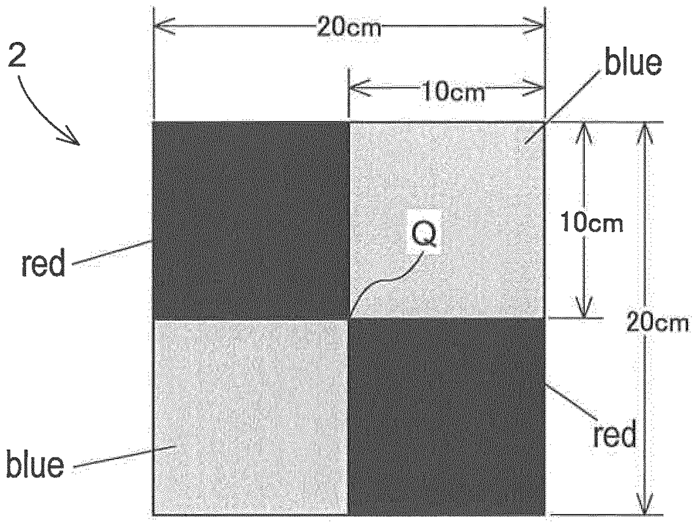
20cm
2
10cm
blue
10cm
Q
red
20cm
red
blue

Fig.4

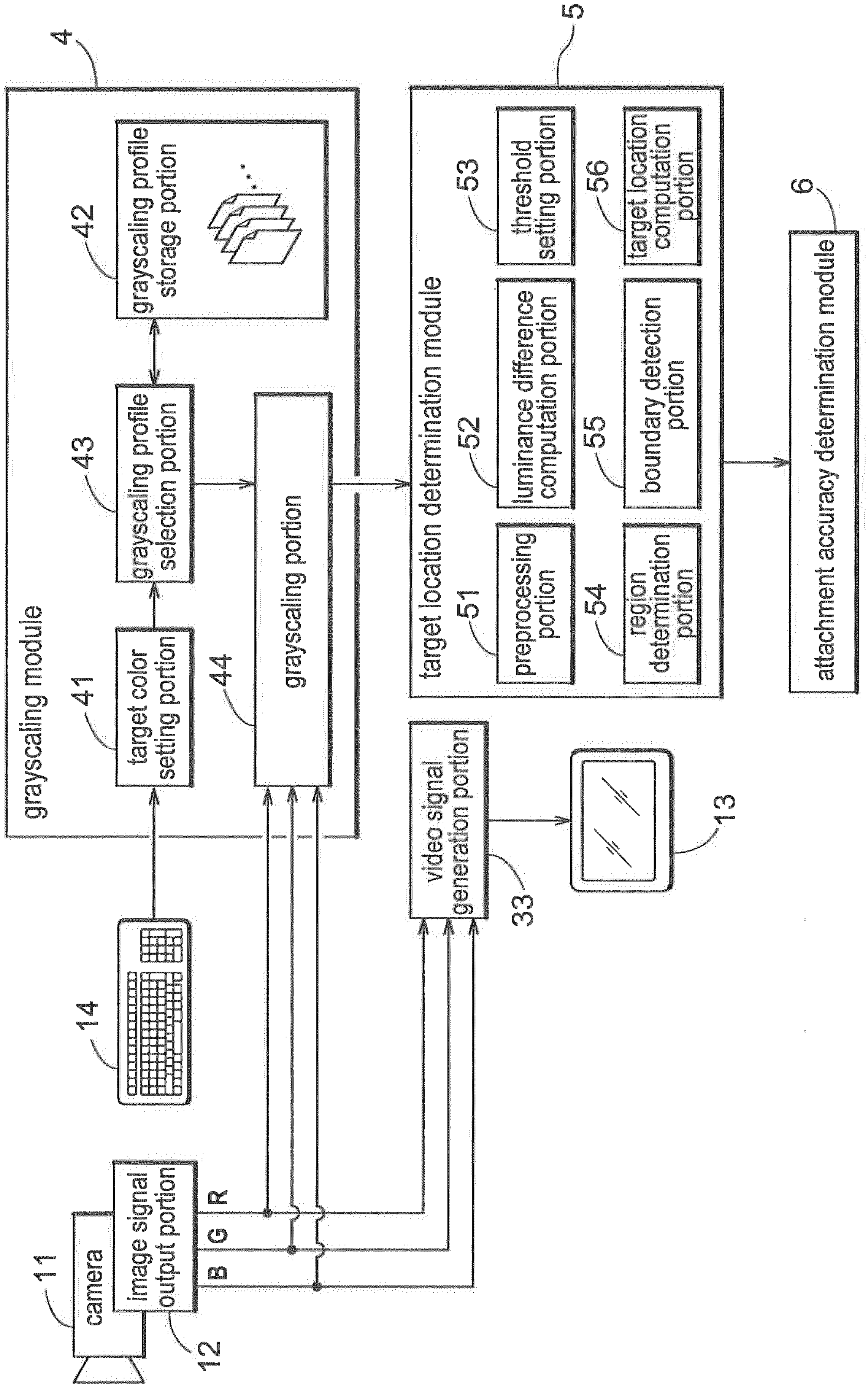
4
grayscaling module
41 target color setting portion
42 grayscaling profile storage portion
43 grayscaling profile selection portion
44 grayscaling portion
5
target location determination module
51 preprocessing portion
52 luminance difference computation portion
53 threshold setting portion
54 region determination portion
55 boundary detection portion
56 target location computation portion
6
attachment accuracy determination module
11 camera
12 image signal output portion
R
G
B
14
33 video signal generation portion
13

Fig.5

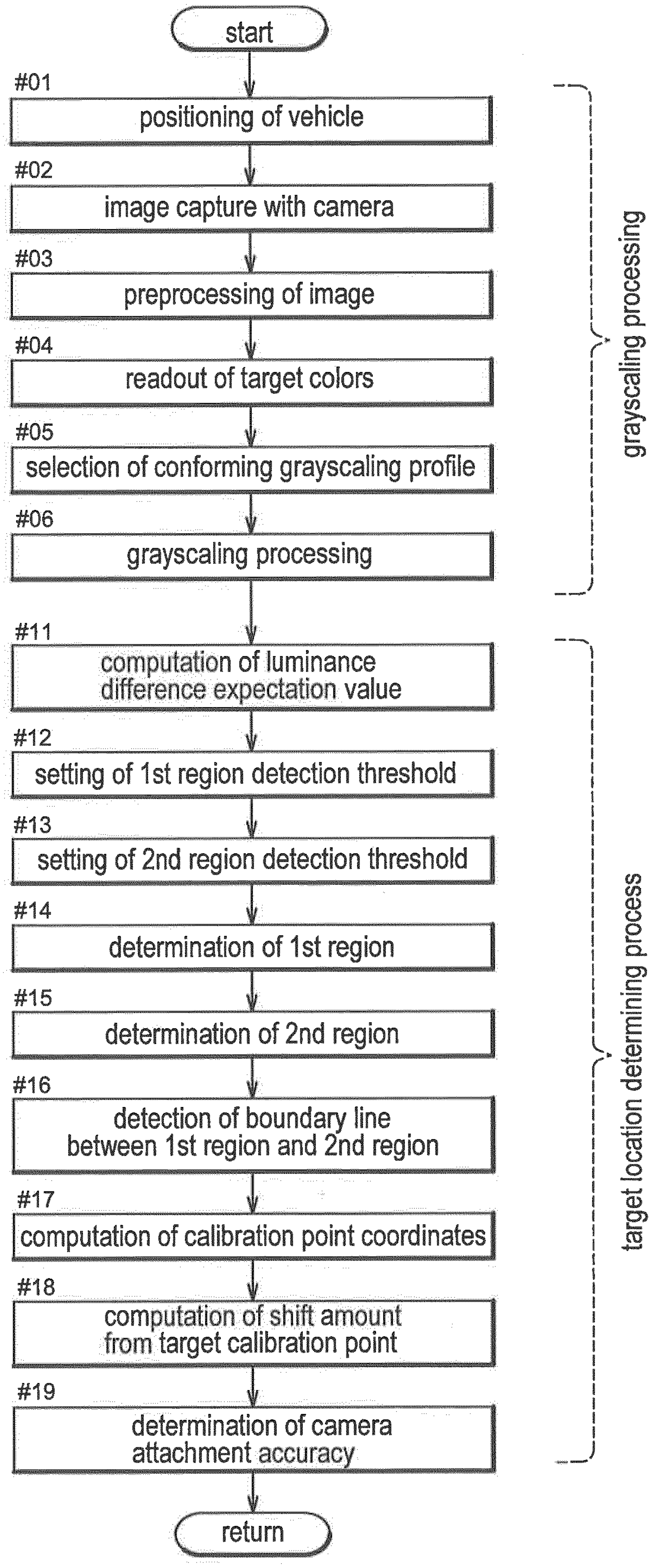
start
#01
positioning of vehicle
#02
image capture with camera
#03
preprocessing of image
#04
readout of target colors
#05
selection of conforming grayscaling profile
#06
grayscaling processing
grayscaling processing
#11
computation of luminance difference expectation value
#12
setting of 1st region detection threshold
#13
setting of 2nd region detection threshold
#14
determination of 1st region
#15
determination of 2nd region
#16
detection of boundary line between 1st region and 2nd region
#17
computation of calibration point coordinates
#18
computation of shift amount from target calibration point
#19
determination of camera attachment accuracy
target location determining process
return

*Fig.6*

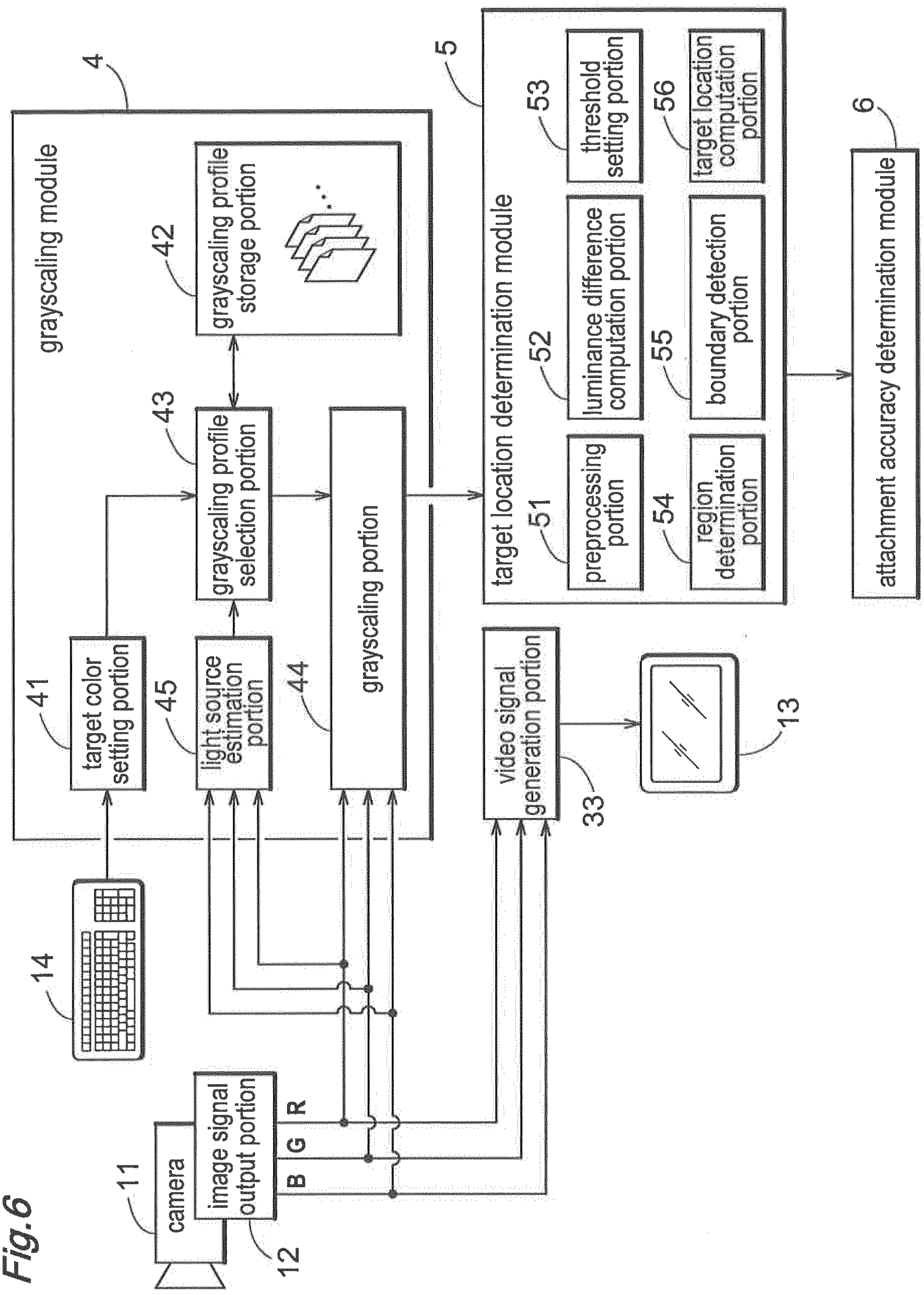
4
grayscaling module
41
target color setting portion
42
grayscaling profile storage portion
43
grayscaling profile selection portion
44
grayscaling portion
45
light source estimation portion
5
target location determination module
51
preprocessing portion
52
luminance difference computation portion
53
threshold setting portion
54
region determination portion
55
boundary detection portion
56
target location computation portion
6
attachment accuracy determination module
11
camera
12
image signal output portion
R
G
B
13
14
33
video signal generation portion

**INTERNATIONAL SEARCH REPORT**

International application No.
PCT/JP2011/066124

A. CLASSIFICATION OF SUBJECT MATTER
*H04N9/64*(2006.01)i, *G06T1/00*(2006.01)i, *G06T7/00*(2006.01)i, *H04N9/04*(2006.01)i

According to International Patent Classification (IPC) or to both national classification and IPC

B. FIELDS SEARCHED

Minimum documentation searched (classification system followed by classification symbols)
H04N9/64, G06T1/00, G06T7/00, H04N9/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2010/016379 A1 (Aisin Seiki Co., Ltd.), 11 February 2010 (11.02.2010), entire text; all drawings & US 2011/0102581 A1 & EP 2309746 A1 & CN 102113321 A & KR 10-2011-0015033 A | 1-8 |
| A | JP 2008-131250 A (Aisin Seiki Co., Ltd.), 05 June 2008 (05.06.2008), entire text; all drawings (Family: none) | 1-8 |
| A | JP 2010-16661 A (Murata Machinery Ltd.), 21 January 2010 (21.01.2010), entire text; all drawings (Family: none) | 1-8 |

☐ Further documents are listed in the continuation of Box C.
☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 October, 2011 (05.10.11) | 18 October, 2011 (18.10.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008131250 A
- WO 2010016379 A